# EUROPÄISCHE PATENTSCHRIFT

(11) **EP 2 396 876 B1**
(45) Veröffentlichungstag und Bekanntmachung des Hinweises auf die Patenterteilung: **02.08.2017**
(21) Anmeldenummer: 10705099.9
(22) Anmeldetag: 11.02.2010
(51) Int. Cl.: H02K 49/04

(54) **ANTRIEBSSYSTEM**
DRIVE SYSTEM
SYSTÈME D'ENTRAÎNEMENT

(30) Priorität: 16.02.2009 DE 102009009103
(43) Veröffentlichungstag der Anmeldung: 21.12.2011
(73) Patentinhaber: SEW-EURODRIVE GmbH & Co. KG, 76646 Bruchsal (DE)
(72) Erfinder: SCHMIDT, Josef, 76676 Graben-Neudorf (DE); MAHLEIN, Jochen, 76139 Karlsruhe (DE); BECKER, Günter, 76684 Östringen (DE); SCHWESINGER, Klaus, 76646 Bruchsal (DE); EGGER, Björn, 76646 Bruchsal (DE)
(86) Internationale Anmeldenummer: PCT/EP2010/000848
(87) Internationale Veröffentlichungsnummer: WO 2010/091865

(56) Entgegenhaltungen:
- WO-A1-2007/007028
- DE-A1- 19 524 289
- DE-A1-102008 031 153
- JP-A- 4 164 718
- JP-A- 61 164 461
- US-A- 5 174 416
- US-A- 5 514 926

## Beschreibung

Die Erfindung betrifft ein Antriebssystem.

Es ist bekannt Rotoren von Synchronmotoren an ihrem Umfang mit Dauermagneten zu bestücken.

**Aus der** WO 2007/007028 A1 **ist ein System zur Erzeugung von Traktionskräften bei einem Aufzug bekannt, wobei die Traktionskräfte mittels Wirbelströmen erzeugt werden.**

**Aus der** DE 195 24 289 A1 **ist eine Bremsvorrichtung bekannt, bei der Wirbelströme in einem relativ zu einer Magnetfelderzeugungseinrichtung bewegbaren Band erzeugt werden.**

**Aus der** DE 10 2008 031153 A1 **ist ein Schienensystem und eine Einschienenhängebahn-Anlage bekannt, wobei an der Schiene ein Schwertteil ausgebildet ist und das Schienenfahrzeug zwei drehbar gelagerte Scheiben aufweist, die Dauermagnete an ihrem Umfang aufweisen.**

Der Erfindung liegt daher die Aufgabe zugrunde, ein Antriebssystem weiter zu verbessern, wobei Verluste klein zu halten sind.

Erfindungsgemäß wird die Aufgabe bei dem Antriebssystem nach den in Anspruch 1 angegebenen Merkmalen gelöst.

Wichtige Merkmale der Erfindung bei dem Antriebssystem, dass es einen ersten und einen zum ersten bewegbar angeordneten zweiten Teil umfasst,
wobei der erste Teil ein in Bewegungsrichtung sich erstreckendes, insbesondere langgestreckt ausgeführtes Schwertteil,
wobei der zweite Teil zwei antreibbare Scheiben umfasst, deren Drehachse im Wesentlichen parallel ausgeführt ist, wobei das Schwertteil zwischen den Scheiben angeordnet ist,
wobei die Scheiben an ihrem Umfang jeweils Dauermagnete aufweisen, deren Magnetisierungsrichtung jeweils zum in Umfangsrichtung nächstbenachbarten Dauermagneten abwechselnde Richtung aufweist,
**wobei die Antriebskraft mittels im Schwertteil induzierten Wirbelströmen erzeugt wird, die durch Vorbeidrehen der Scheiben am Schwertteil induziert werden,**
**wobei das als Stranggussprofil gefertigte Schwertteil als Teilbereich in einem Schienensystem oder in einer Schiene integriert vorgesehen ist, wobei am Schienensystem oder an der Schiene Führungsräder des zweiten Teils abrollbar sind, so dass das zweite Teil am Schienensystem geführt ist,**
**wobei die Drehachsen der Scheiben im Wesentlichen parallel ausgeführt sind,**
**wobei die Scheiben die Dauermagnete an ihrem Umfang aufweisen,**
**deren Magnetisierungsrichtung im Vergleich zur Magnetisierungsrichtung der in Umfangsrichtung nächstbenachbarten Dauermagnete radial und entgegengesetzt ausgerichtet ist.**

Von Vorteil ist dabei, dass die Vortriebskraft mit Wirbelströmen erzeugt wird. Mittels der Orientierung der Drehachsen der Scheiben sind Verluste beim Annähern der Dauermagnete an das Schwertteil verringerbar. Bei anderen Orientierungen sind diese Verluste größer und es entstehen auch Kraftkomponenten in anderen Richtungen, so dass nicht nur Vorschubskraft in Bewegungsrichtung entsteht. Bei der Erfindung entsteht im Wesentlichen nur Vorschubkraft in Bewegungsrichtung. Denn der wesentliche Teil der Vorschubskraft wird tangential zur Bewegungsrichtung des jeweiligen Dauermagneten erzeugt, wobei die Kraft bei abnehmendem Abstand des jeweiligen Dauermagneten zum Schwertteil stark zunimmt.

**Erfindungsgemäß** ist das Schwertteil **als** Stranggussprofil **gefertigt.** Von Vorteil ist dabei, dass eine einfache Herstellung ermöglicht ist.

**Erfindungsgemäß** ist die Antriebskraft mittels im Schwertteil induzierten Wirbelströmen erzeugbar, insbesondere durch bei Vorbeidrehen der Scheiben am Schwertteil entlang. Von Vorteil ist dabei, dass ein sanftes Antreiben ermöglicht ist. Insbesondere ist es ermöglicht durch synchrones Betreiben der Scheiben einen Winkelversatz einzustellen, so dass die Vortriebskraft sehr schnell und einfach veränderbar ist.

Bei einer vorteilhaften Ausgestaltung ist das Schwertteil Teilbereich eines Schienensystems oder einer Schiene. Von Vorteil ist dabei, dass eine einfache integrierte Herstellung ausführbar ist.

Bei einer vorteilhaften Ausgestaltung sind die Scheiben von Elektromotoren antreibbar, insbesondere Drehstrommotoren, insbesondere Synchronmotoren. Von Vorteil ist dabei, dass einfache kostengünstige Mittel anwendbar sind.

Bei einer vorteilhaften Ausgestaltung sind die Scheiben in **einer gemeinsamen** Ebene angeordnet, also nebeneinander angeordnet. Von Vorteil ist dabei, dass ein sehr hoher Wirkungsgrad erreichbar ist, da bei der Drehbewegung sehr starke Magnetfeldlinien in das Schwertteil eingeleitet werden, wodurch sehr hohe Wirbelströme erzeugt werden.

Bei einer vorteilhaften Ausgestaltung ist ein axialer Bereich
- einerseits Teilbereich des von einer der Scheiben überdeckten axialen Bereichs und
- andererseits Teilbereich des von der anderen Scheibe überdeckten axialen Bereichs.
Von Vorteil ist dabei, dass möglichst starke Magnetfeldlinien einlenkbar sind.

Bei einer vorteilhaften Ausgestaltung ist jeder Dauermagnet aus zwei oder mehr einzelnen Dauermagneten ausgeführt, die radial übereinander angeordnet sind. Von Vorteil ist dabei, dass ein noch stärkeres Magnetfeld und somit auch eine höhere Vorschubkraft erzeugbar ist.

Bei einer vorteilhaften Ausgestaltung ist jeder Dauermagnet aus zwei oder mehr einzelnen Dauermagneten ausgeführt, die in Umfangsrichtung nebeneinander angeordnet sind. Von Vorteil ist dabei, dass ein höherer Wirkungsgrad erreichbar ist.

Bei einer vorteilhaften Ausgestaltung ist das Schwertteil aus Aluminium oder Kupfer oder einem anderen besser als Stahl elektrisch leitfähigen Material gefertigt. Von Vorteil ist dabei, dass geringere Verluste auftreten als bei Verwendung von Stahl.

Bei einer vorteilhaften Ausgestaltung ist eine derartige Regelvorrichtung vorgesehen, dass die beiden Antriebe der Scheiben synchron betreibbar sind. Von Vorteil ist dabei, dass Verluste reduzierbar sind.

Weitere Vorteile ergeben sich aus den Unteransprüchen.

Die Erfindung wird nun anhand von Abbildungen näher erläutert:

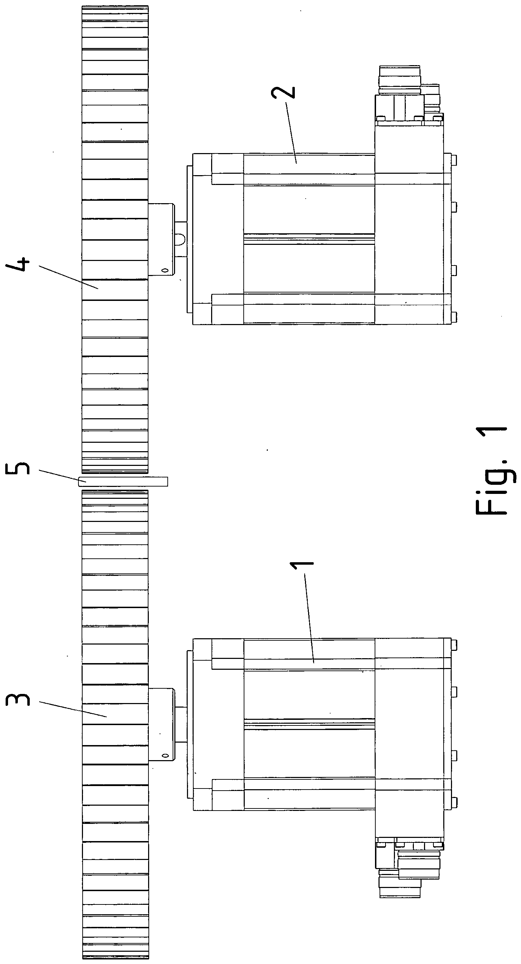

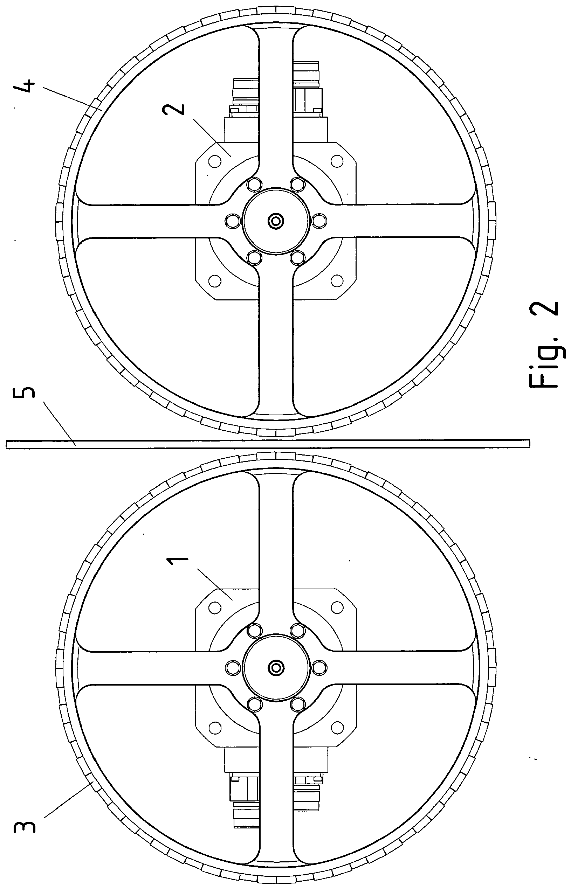

In der Figur 1 ist eine erfindungsgemäße Vorrichtung schematisch skizziert in Draufsicht. In Figur 2 ist die zugehörige Seitenansicht gezeigt.

Hierbei treibt der Elektromotor 1 eine Scheibe 3 und der Elektromotor 2 eine Scheibe 4 an, wobei die Scheiben und Motoren miteinander verbunden sind und als Ganzes relativ bewegbar entlang dem Schwertteil 5 angeordnet sind.

Beispielsweise sind die Motoren (1, 2) und Scheiben (3, 4) an einem Fahrzeug anbringbar, dessen Führungsräder an einem Schienensystem oder Schienenteil abrollbar sind, so dass das Fahrzeug am Schienensystem geführt ist.

Die Scheiben (3, 4) weisen an ihrem äußeren Umfang Dauermagnete auf, deren Magnetisierungsrichtung im Vergleich zur Magnetisierungsrichtung der in Umfangsrichtung nächstbenachbarten Dauermagnete radial und entgegengesetzt ausgerichtet ist. Zwischen den Magneten ist in Umfangsrichtung ein Abstand ausgeführt, der in den Figuren untertrieben klein dargestellt ist.

Die Drehachsen der Scheiben (3, 4) sind parallel gewählt und senkrecht zur Bewegungsrichtung. Das Schwertteil ist entlang der Bewegungsrichtung langgestreckt ausgeführt und ist vorzugsweise als Stranggussteil fertigbar. Vorzugsweise ist das Schwertteil aus Aluminium oder Kupfer ausgeführt oder aus einem entsprechend elektrisch leitfähigen Material.

Die Bewegungsrichtung entspricht der Normalenrichtung derjenigen Ebene, in welcher die Drehachsen der Scheiben (3, 4) liegen.

Bei hoher Drehzahl der Scheiben (3, 4) werden Wirbelströme im Schwertteil 5 erzeugt, da die am Schwertteil 5 vorbeidrehenden Scheiben diese erzeugen und somit eine Antriebskraft zwischen Schwertteil 5 und Scheiben (3, 4) bewirkt ist.

Die Motoren sind als Drehstrommotoren ausführbar, wie beispielsweise Asynchronmotoren oder Synchronmotoren. Dabei werden die Motoren von jeweiligen Umrichtern gespeist und somit auch gesteuert. Hierbei wird als Ziel der Regelung eine Synchronität der Scheiben gesetzt, damit das in das Schwertteil eindringende Magnetfeld möglichst stark ist und somit möglichst große Wirbelströme erzeugt und daher auch große Vortriebskräfte.

Der Abstand zwischen den Scheiben (3, 4) ist etwas größer als die Dicke des Schwertteils 5, so dass auch unter Berücksichtigung von Fertigungstoleranzen keine Berührung statt findet zwischen dem Schwertteil 5 und den Scheiben. Denn die Drehzahl der Scheiben ist viel höher als die Drehzahl eines gedachten, am Schwertteil ohne Schlupf abrollenden Rades.

### Bezugszeichenliste

- 1: Elektromotor
- 2: Elektromotor
- 3: Scheibe
- 4: Scheibe
- 5: Schwertteil, insbesondere Schienenteil

## Patentansprüche

1. Antriebssystem, umfassend einen ersten und einen zum ersten relativ bewegbar angeordneten zweiten Teil,
wobei der erste Teil ein in Bewegungsrichtung sich erstreckendes, insbesondere langgestreckt ausgeführtes Schwertteil (5) aufweist,
**wobei** der zweite Teil zwei drehbar gelagerte, antreibbare Scheiben (3, 4) umfasst, wobei das Schwertteil (5) zwischen den Scheiben (3, 4) angeordnet ist,
wobei die Scheiben (3, 4) jeweils Dauermagnete aufweisen, deren Magnetisierungsrichtung jeweils zum in Umfangsrichtung nächstbenachbarten Dauermagneten abwechselnde Richtung aufweist,
**wobei die Antriebskraft mittels im Schwertteil induzierten Wirbelströmen erzeugt wird, die durch Vorbeidrehen der Scheiben am Schwertteil induziert werden,**
**wobei das als Stranggussprofil gefertigte Schwertteil (5) als Teilbereich in einem Schienensystem (5) oder in einer Schiene (5) integriert vorgesehen ist, wobei am Schienensystem (5) oder an der Schiene (5) Führungsräder des zweiten Teils abrollbar sind, so dass das zweite Teil am Schienensystem (5) geführt ist,**
**dadurch gekennzeichnet, dass**
**die Drehachsen der Scheiben im Wesentlichen parallel ausgeführt sind,**
**wobei die Scheiben (3, 4) die Dauermagnete an ihrem Umfang aufweisen,**
**deren Magnetisierungsrichtung im Vergleich zur Magnetisierungsrichtung der in Umfangsrichtung nächstbenachbarten Dauermagnete radial und entgegengesetzt ausgerichtet ist.**

2. Antriebssystem nach Anspruch 1,
**dadurch gekennzeichnet, dass**
die Scheiben (3, 4) von Elektromotoren (1, 2) antreibbar sind, insbesondere Drehstrommotoren, insbesondere Synchronmotoren.

3. Antriebssystem nach mindestens einem der vorangegangenen Ansprüche,
**dadurch gekennzeichnet, dass**
**jeder Dauermagnet aus zwei oder mehr einzelnen Dauermagneten ausgeführt ist, die jeweils radial übereinander angeordnet sind.**

4. Antriebssystem nach mindestens einem der vorangegangenen Ansprüche,
**dadurch gekennzeichnet, dass**
**jeder Dauermagnet aus zwei oder mehr einzelnen Dauermagneten ausgeführt ist, die jeweils in Umfangsrichtung nebeneinander angeordnet sind.**

5. Antriebssystem nach mindestens einem der vorangegangenen Ansprüche,
**dadurch gekennzeichnet, dass**
die Scheiben (3, 4) in derselben Ebene angeordnet sind, also nebeneinander angeordnet sind.

6. Antriebssystem nach mindestens einem der vorangegangenen Ansprüche,
**dadurch gekennzeichnet, dass**
ein axialer Bereich
- einerseits Teilbereich des von einer der Scheiben (3, 4) überdeckten axialen Bereichs und
- andererseits Teilbereich des von der anderen Scheibe (3, 4) überdeckten axialen Bereichs
ist.

7. Antriebssystem nach mindestens einem der vorangegangenen Ansprüche,
**dadurch gekennzeichnet, dass**
das Schwertteil (5) aus Aluminium gefertigt ist.

8. Antriebssystem nach mindestens einem der vorangegangenen Ansprüche,
**dadurch gekennzeichnet, dass**
eine derartige Regelvorrichtung vorgesehen ist, dass die beiden Antriebe der Scheiben (3, 4) synchron betreibbar sind.

9. Antriebssystem nach mindestens einem der vorangegangenen Ansprüche,
**dadurch gekennzeichnet, dass**
die Antriebskraft mittels im Schwertteil (5) induzierten Wirbelströmen erzeugbar ist, insbesondere durch bei Vorbeidrehen der Scheiben (3, 4) am Schwertteil (5) entlang.

10. Antriebssystem nach mindestens einem der vorangegangenen Ansprüche,
**dadurch gekennzeichnet, dass**
die Drehachsen senkrecht zur Bewegungsrichtung ausgerichtet sind.

11. **Verfahren zum Betreiben eines Antriebssystem nach mindestens einem der vorangegangenen Ansprüche,**
**dadurch gekennzeichnet, dass**
**die beiden Antriebe der Scheiben (3, 4) mit einer Drehzahl betrieben werden, die viel höher ist als die Drehzahl eines gedachten, am Schwertteil (5) ohne Schlupf abrollenden Rades,**
**wobei auf Synchronität der Scheiben (3, 4) hin geregelt wird,**
**wobei durch Einstellen eines Winkelversatzes zwischen den Scheiben (3, 4) die Vortriebskraft steuerbar ist.**

## Claims

1. A drive system, comprising a first part and a second part arranged movably relative to the first part,
wherein the first part is a tongue part (5), in particular an elongate one, extending in the direction of movement,
wherein the second part comprises two rotatably mounted, drivable discs (3, 4), wherein the tongue part (5) is arranged between the discs (3, 4),
wherein the discs (3, 4) in each case have permanent magnets, the direction of magnetisation of which in each case has an alternate direction to the permanent magnet next adjacent in the peripheral direction,
wherein the driving force is generated by means of eddy currents induced in the tongue part which are induced by turning the discs past the tongue part,
wherein the tongue part (5), which is manufactured as a continuously-cast profile, is provided integrated as a partial region in a rail system (5) or in a rail (5), wherein guide wheels of the second part can be rolled on the rail system (5) or on the rail (5), so that the second part is guided on the rail system (5),
**characterised in that**
the axes of rotation of the discs are embodied substantially parallel,
the discs (3, 4) having the permanent magnets on their periphery,
the direction of magnetisation of which compared with the direction of magnetisation of the permanent magnets next adjacent in the peripheral direction is oriented radially and in the opposite direction.

2. A drive system according to Claim 1,
**characterised in that**
the discs (3, 4) can be driven by electric motors (1, 2), in particular three-phase motors, in particular synchronous motors.

3. A drive system according to at least one of the preceding claims,
**characterised in that**
each permanent magnet is formed from two or more individual permanent magnets which are in each case arranged radially above one another.

4. A drive system according to at least one of the preceding claims,
**characterised in that**
each permanent magnet is formed from two or more individual permanent magnets which are in each case arranged next to each other in the peripheral direction.

5. A drive system according to at least one of the preceding claims,
**characterised in that**
the discs (3, 4) are arranged in the same plane, i.e. are arranged next to each other.

6. A drive system according to at least one of the preceding claims,
**characterised in that**
an axial region is
- on one hand a partial region of the axial region covered by one of the discs (3, 4) and
- on the other hand a partial region of the axial region covered by the other disc (3, 4).

7. A drive system according to at least one of the preceding claims,
**characterised in that**
the tongue part (5) is manufactured from aluminium.

8. A drive system according to at least one of the preceding claims,
**characterised in that**
such a regulating device is provided that the two drives of the discs (3, 4) can be operated synchronously.

9. A drive system according to at least one of the preceding claims,
**characterised in that**
the driving force can be generated by means of eddy currents induced in the tongue part (5), in particular by [sic] upon turning the discs (3, 4) past along the tongue part (5).

10. A drive system according to at least one of the preceding claims,
**characterised in that**
the axes of rotation are oriented perpendicular to the direction of movement.

11. A method for operating a drive system according to at least one of the preceding claims,
**characterised in that**
the two drives of the discs (3, 4) are operated at a speed which is much higher than the speed of a notional wheel rolling on the tongue part (5) without slip,
with regulation being carried out with the aim of synchronous operation of the discs (3, 4),
with the propulsive force being controllable by setting an angular offset between the discs (3, 4).

## Revendications

1. Système d'entraînement, comprenant une première partie et une deuxième partie disposée à déplacement par rapport à la première,
sachant que la première partie présente un élément ensiforme (5) s'étendant dans la direction de déplacement, notamment réalisé oblong,
sachant que la deuxième partie comprend deux disques (3,4) montés à rotation et pouvant être entrainés, sachant que l'élément ensiforme (5) est disposé entre les disques (3,4),
sachant que les disques (3,4) présentent respectivement des aimants permanents dont le sens d'aimantation est chaque fois alterné par rapport à l'aimant permanent immédiatement voisin en direction périphérique,
sachant que la force d'entraînement est produite au moyen de courants de Foucault induits dans l'élément ensiforme, qui sont induits par la rotation des disques le long de l'élément ensiforme,
sachant que l'élément ensiforme (5) fabriqué sous forme de profilé de coulée continue est prévu intégré en tant que région partielle dans un système de rails (5) ou dans un rail (5), sachant que des roues de guidage de la deuxième partie peuvent rouler sur le système de rails (5) ou sur le rail (5), de sorte que la deuxième partie est guidée sur le système de rails (5),
**caractérisé en ce que** les axes de rotation des disques sont réalisés sensiblement parallèles,
sachant que les disques (3,4) présentent les aimants permanents sur leur périphérie, aimants dont le sens d'aimantation est orienté radialement et en opposition par rapport au sens d'aimantation des aimants permanents immédiatement voisins en direction périphérique.

2. Système d'entraînement selon la revendication 1, **caractérisé en ce que** les disques (3,4) peuvent être entraînés par des moteurs électriques (1, 2), en particulier des moteurs triphasés, notamment des moteurs synchrones.

3. Système d'entraînement selon au moins une des revendications précédentes, **caractérisé en ce que** chaque aimant permanent est constitué de deux aimants permanents individuels ou davantage, qui sont chaque fois disposés en superposition radiale.

4. Système d'entraînement selon au moins une des revendications précédentes, **caractérisé en ce que** chaque aimant permanent est constitué de deux aimants permanents individuels ou davantage, qui sont chaque fois disposés en juxtaposition en direction périphérique.

5. Système d'entraînement selon au moins une des revendications précédentes, **caractérisé en ce que** les disques (3,4) sont disposés dans le même plan, donc sont disposés en juxtaposition.

6. Système d'entraînement selon au moins une des revendications précédentes, **caractérisé en ce qu'**une région axiale est
- d'une part une région partielle de la région axiale couverte par un des disques (3, 4), et
- d'autre part une région partielle de la région axiale couverte par l'autre disque (3, 4).

7. Système d'entraînement selon au moins une des revendications précédentes, **caractérisé en ce que** l'élément ensiforme (5) est fabriqué en aluminium.

8. Système d'entraînement selon au moins une des revendications précédentes, **caractérisé en ce qu'**il est prévu un dispositif de régulation tel que les deux entraînements des disques (3,4) peuvent être exploités en synchronisme.

9. Système d'entraînement selon au moins une des revendications précédentes, **caractérisé en ce que** la force d'entraînement peut être produite au moyen de courants de Foucault induits dans l'élément ensiforme (5), en particulier induits par la rotation des disques (3, 4) le long de l'élément ensiforme (5).

10. Système d'entraînement selon au moins une des revendications précédentes, **caractérisé en ce que** les axes de rotation sont orientés perpendiculairement à la direction de déplacement.

11. Procédé d'exploitation d'un système d'entraînement selon au moins une des revendications précédentes, **caractérisé en ce que** les deux entraînements des disques (3,4) sont exploités à une vitesse de rotation qui est beaucoup plus élevée que la vitesse de rotation d'une roue imaginaire roulant sans patinage sur l'élément ensiforme (5),
sachant qu'on effectue une régulation en direction d'un synchronisme des disques (3,4), sachant que la force d'avancement peut être modulée en réglant un décalage angulaire entre les disques (3,4).
